# EUROPEAN PATENT APPLICATION

(11) **EP 4 645 767 A1**
(43) Date of publication of application: **05.11.2025**
(21) Application number: 23915787.8
(22) Date of filing: 19.12.2023
(51) Int. Cl.: H04L 12/437

(54) **ANTI-LOOP METHOD FOR 5GS TSN VIRTUAL BRIDGE, DEVICE, AND STORAGE MEDIUM**

(30) Priority: 13.01.2023 CN 202310059703
(71) Applicant: ZTE CORPORATION, Shenzhen, Guangdong 518057 (CN)
(72) Inventor: DU, Xiangwen, Shenzhen, Guangdong 518057 (CN); ZHAN, Yajun, Shenzhen, Guangdong 518057 (CN); JIAN, Huijun, Shenzhen, Guangdong 518057 (CN)
(74) Representative: Ziebig Hengelhaupt Intellectual Property Attorneys Patentanwaltskanzlei PartGmbB
(86) International application number: PCT/CN2023/139937
(87) International publication number: WO 2024/149033

(57) **Abstract**

The present application relates to the technical field of time-sensitive networking (TSN), and discloses an anti-loop method for a 5GS TSN virtual bridge, a device, and a storage medium. The present application is applied to an NW-TT in a 5GS TSN virtual bridge; the 5GS TSN virtual bridge further comprises DS-TTs, and one NW-TT corresponds to a plurality of DS-TTs; when the NW-TT receives a packet sent by a target port corresponding to the DS-TTs, an anti-loop flag corresponding to the target port is identified; a preset anti-loop mapping relationship table is used for storing a preset anti-loop mapping relationship between ports corresponding to the plurality of DS-TTs and the anti-loop flag; whether the anti-loop flag is present in the preset anti-loop mapping relationship table is determined, and if yes, the packet is not sent to the port corresponding to the anti-loop flag.

## Description

### CROSS-REFERENCE TO RELATED APPLICATIONS

The present application claims priority to Chinese patent application No. 202310059703.0 filed on January 13, 2023, the entire content of which is incorporated herein by reference.

### TECHNICAL FIELD

The present application relates to the technical field of time-sensitive networks, in particular to a loop prevention method and device for a 5GS TSN virtual bridge, and a storage medium.

### BACKGROUND

In the technical field of industrial Ethernet, the reliability of end-to-end device communication is generally ensured by redundancy mechanisms, i.e., duplicating data frames, but duplicated data frames will reduce the throughput of the network and cause network congestion.

Currently, the IEEE802.1CB protocol (a redundancy protocol in the time-sensitive network (TSN) standard) defines a scheme to realize redundant transmission in Ethernet networks, i.e., redundancy is eliminated by inserting redundancy tags with sequence numbers into data frames, and on a data receiver side, whether a data frame is a duplicate of a previously received data frame is determined according to the redundancy tags, and the duplicate is deleted, with only one data frame retained, thereby preventing the reception of a plurality of identical data frames, which may cause network congestion.

The prerequisite for realizing the above scheme is that there are redundant paths for data transmission in the network. However, the present application relates to a 5GS TSN virtual bridge that regards the 5G system (5GS) as a whole as a virtual TSN bridge. Network-side TSN translator (NW-TT) resources in the 5GS TSN virtual bridge are limited, and it is impossible to provide an independent NW-TT for each device-side TSN translator (DS-TT). Generally, a plurality of DS-TTs are connected through one NW-TT. During broadcast or multicast, when an NW-TT receives a packet sent by a terminal, the NW-TT may send the packet out from other DS-TTs to form a loop. Once a loop occurs, broadcast or multicast may be forwarded in an infinite loop in the network, triggering a network storm and causing devices in the network to be impacted.

### SUMMARY

The main object of the present application is to provide a loop prevention method, apparatus and device for a 5GS TSN virtual bridge, and a storage medium, aiming at solving the technical problem that it is difficult to effectively prevent broadcast or multicast loops in a 5GS TSN virtual bridge.

In order to achieve the above object, the present application provides a loop prevention method for a 5GS TSN virtual bridge. The loop prevention method is applied to an NW-TT in a 5GS TSN virtual bridge, and the 5GS TSN virtual bridge further includes DS-TTs, and one NW-TT corresponds to a plurality of DS-TTs.

The loop prevention method for a 5GS TSN virtual bridge includes the following steps:
identifying, when packets sent by destination ports corresponding to the DS-TTs are received, loop prevention identifiers corresponding to the destination ports; and
determining whether the loop prevention identifiers exist in a preset loop prevention mapping relationship table, and if yes, skipping sending the packets to ports corresponding to the loop prevention identifiers, where the preset loop prevention mapping relationship table is used to store preset loop prevention mapping relationships between ports corresponding to the plurality of DS-TTs and the loop prevention identifiers.

### BRIEF DESCRIPTION OF DRAWING(S)

Fig. 1 is a schematic flow diagram of a loop prevention method for a 5GS TSN virtual bridge according to a first embodiment of the present application;
Fig. 2 is a schematic diagram of a first scenario of a loop prevention method for a 5GS TSN virtual bridge according to a first embodiment of the present application;
Fig. 3 is a schematic diagram of a second scenario of a loop prevention method for a 5GS TSN virtual bridge according to a first embodiment of the present application;
Fig. 4 is a schematic diagram of a third scenario of a loop prevention method for a 5GS TSN virtual bridge according to a first embodiment of the present application;
Fig. 5 is a schematic diagram of a fourth scenario of a loop prevention method for a 5GS TSN virtual bridge according to a second embodiment of the present application;
Fig. 6 is a schematic diagram of a fifth scenario of a loop prevention method for a 5GS TSN virtual bridge according to a second embodiment of the present application;
Fig. 7 is a schematic diagram of a sixth scenario of a loop prevention method for a 5GS TSN virtual bridge according to a third embodiment of the present application;
Fig. 8 is a schematic diagram of a seventh scenario of a loop prevention method for a 5GS TSN virtual bridge according to a third embodiment of the present application;
Fig. 9 is a schematic structural diagram of a loop prevention device for a 5GS TSN virtual bridge in a hardware operation environment involved in an embodiment scheme of the present application.

The implementation of objects, function features and advantages of the present application will be further described with reference to the accompanying drawings in conjunction with embodiments.

### DETAILED DESCRIPTION

It is to be understood that the specific embodiments described herein are merely illustrative of the present application and are not intended to limit the present application. Although the terms "first", "second", "third", etc. may be used herein to describe various information, such information should not be limited to these terms. These terms are merely used to distinguish the same type of information from each other. For example, without departing from the scope of the present application, first information may also be referred to as second information, and similarly, the second information may also be referred to as the first information.

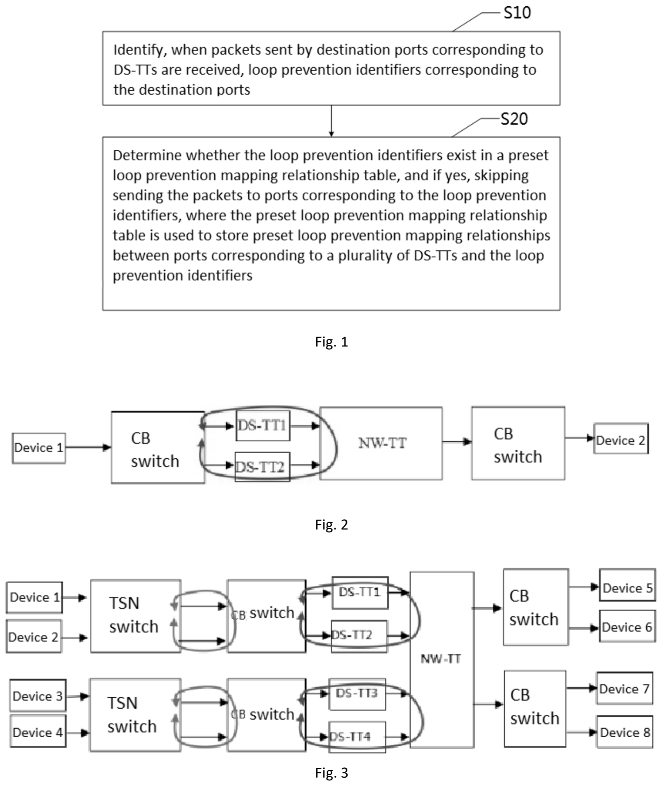

An embodiment of the present application provides a loop prevention method for a 5GS TSN virtual bridge. Referring to Fig. 1, in this embodiment, the loop prevention method for the 5GS TSN virtual bridge includes:
step S10: identifying, when packets sent by destination ports corresponding to DS-TTs are received, loop prevention identifiers corresponding to the destination ports; and
step S20: determining whether the loop prevention identifiers exist in a preset loop prevention mapping relationship table, and if yes, skipping sending the packets to ports corresponding to the loop prevention identifiers, where the preset loop prevention mapping relationship table is used to store preset loop prevention mapping relationships between ports corresponding to the plurality of DS-TTs and the loop prevention identifiers.

As an example, in the technical field of industrial Ethernet, the reliability of end-to-end device communication is ensured generally by redundancy mechanisms, i.e., by duplicating data frames, but duplicated data frames may reduce the throughput of the network and cause network congestion. Currently, a scheme for realizing redundant transmission in Ethernet networks is defined in the IEEE802.1CB protocol (a redundancy protocol in the TSN standard), i.e., redundancy is eliminated by inserting redundancy tags with sequence numbers into data frames. On a data receiver side, whether a data frame is a duplicate of a previously received data frame is determined according to a redundancy tag, and the duplicate is deleted, with only one data frame retained, thereby preventing the reception of a plurality of identical data frames, which may cause abnormalities of the end side.

The prerequisite for realizing the above solution is that there are redundant paths for data transmission in the network. However, the present application relates to a 5GS TSN virtual bridge that regards the 5GS as a whole as a virtual TSN bridge. NW-TT resources in the 5GS TSN virtual bridge are limited, and it is impossible to provide an independent NW-TT for each DS-TT. As shown in Fig. 2, generally, a plurality of DS-TTs (DS-TT1, DS-TT2, etc.) are connected through one NW-TT. During broadcasting or multicasting, when an NW-TT receives a packet sent by a terminal, the NW-TT may send the packet out from all other DS-TTs, so a loop is formed. Once a loop occurs, broadcast or multicast may be forwarded in an infinite loop in the network, triggering a network storm and causing devices in the network to be impacted. Therefore, in the scenario of external redundancy networking, the NW-TT and external switches that support the IEEE802.1CB protocol may form a loop.

There are two situations that may lead to a loop. As shown in Fig. 2, DS-TT1 and DS-TT2 reach the NW-TT through two different packet data unit (PDU) sessions. DS-TT1 sends a broadcast packet to the NW-TT, DS-TT2 also sends a broadcast packet to the NW-TT, and the NW-TT may send the broadcast packet received from DS-TT1 back to a CB switch from DS-TT2, so a loop is formed. In more complex network scenarios, in addition to the situation where the NW-TT and the external switches that support the IEEE802.1CB protocol form a broadcast loop, a loop may also be formed among multiple levels of TSN switches, as shown in Fig. 3.

As an example, when TSN services are handled, some scenarios require broadcast and multicast processing. The loop formed among the multiple levels of TSN switches may be solved by configuring different VLANs on different ports. However, the problem of the broadcast loop between the NW-TT and the external switches that support the IEEE802.1CB protocol has not been effectively solved by the current protocols and related patents. Therefore, the present application provides a loop prevention method for a 5GS TSN virtual bridge to address this problem.

As an example, loop prevention means preventing the occurrence of loop phenomena.

As an example, the loop prevention method for the 5GS TSN virtual bridge is applied to the NW-TT in the 5GS TSN virtual bridge.

As an example, a virtual bridge is used to realize interconnection of local area networks on a data link layer, and the main function thereof is to forward data packets between different network interfaces accessed.

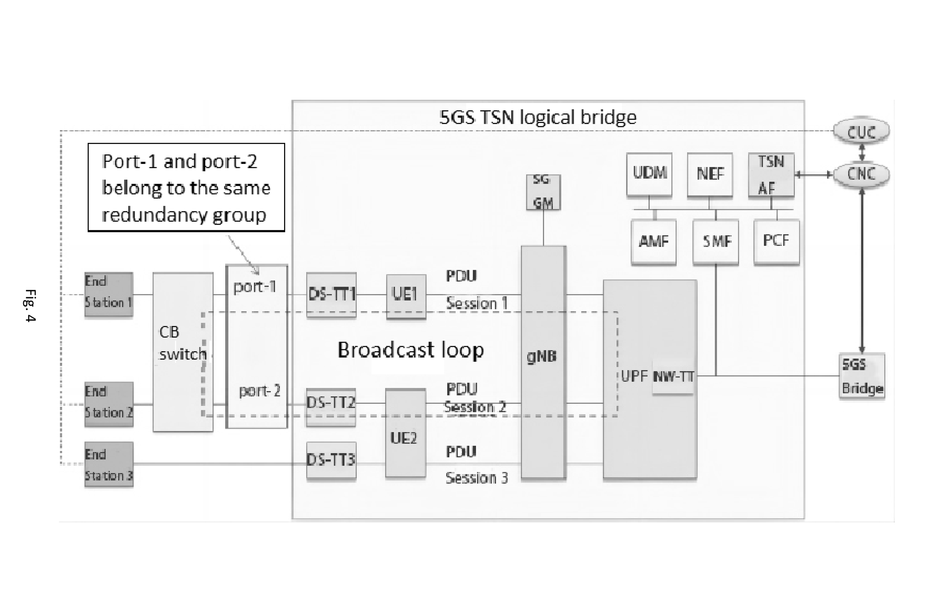

As an example, as shown in Fig. 4, the 5GS TSN virtual bridge includes an NW-TT and DS-TTs, and one NW-TT corresponds to a plurality of DS-TTs.

This embodiment aims to block, by identifying DS-TTs belonging to the same broadcast/multicast loop, the propagation of a packet between the DS-TTs within the same loop, so that the problem of broadcast loops caused when a plurality of DS-TTs are connected through one NW-TT is solved, and accordingly the problem of broadcast/multicast loops between the NW-TT and the external switches that support the IEEE 802.1CB protocol is solved.

The specific steps are as follows:
In step S10, when packets sent by destination ports corresponding to DS-TTs are received, loop prevention identifiers corresponding to the destination ports are identified.

As an example, as shown in Fig. 4, an end station x1 (end station 1) sends a packet to DS-TT1 via a port 1, and DS-TT1 then sends the packet to the NW-TT through the packet data unit (PDU) session initiated by a user terminal (UE1).

As an example, the establishment process of the PDU session is initiated by the user terminal side, with the aim of establishing a new PDU session (a data transmission channel between the user terminal and the external network) between the user terminal and the NW-TT.

As an example, the destination port is a port through which a DS-TT sends a packet.

As an example, the packet may be a broadcast packet or a multicast packet, etc., which is not limited specifically.

As an example, the loop prevention identifier is an identifier of the packet itself or an identifier pre-configured for each port, etc., which is not limited specifically.

As an example, the loop prevention identifier may be a source media access control (MAC) address of the packet, or a redundancy group tag configured for each port, etc., which is not limited specifically.

As an example, when receiving the packets sent by the destination ports corresponding to the DS-TTs, the NW-TT identifies the loop prevention identifiers corresponding to the destination ports, i.e., identifying the source MAC addresses of the end stations sending the packets corresponding to the destination ports, or identifying redundancy group tags pre-configured for the destination ports, etc., which is not limited specifically.

In step S20, whether the loop prevention identifiers exist in a preset loop prevention mapping relationship table is determined, and if yes, the packets are not sent to ports corresponding to the loop prevention identifiers, where the preset loop prevention mapping relationship table is used to store preset loop prevention mapping relationships between ports corresponding to the plurality of DS-TTs and the loop prevention identifiers.

As an example, the preset loop prevention mapping relationship table is used to store the preset loop prevention mapping relationships between the ports corresponding to the plurality of DS-TTs and the loop prevention identifiers. For example, the preset loop prevention mapping relationship table may store a preset loop prevention mapping relationship between a port corresponding to DS-TT1 and a loop prevention identifier 1, a preset loop prevention mapping relationship between a port corresponding to DS-TT1 and a loop prevention identifier 2, and a preset loop prevention mapping relationship between a port corresponding to DS-TT2 and the loop prevention identifier 1, etc., which is not limited specifically.

As an example, after the NW-TT receives the packets sent by the destination ports corresponding to the DS-TTs and then identifies the loop prevention identifiers corresponding to the destination ports, whether the loop prevention identifiers exist in the preset loop prevention mapping relationship table is determined, that is, whether the loop prevention identifiers corresponding to the destination ports exist in the preset loop prevention mapping relationship table is checked, and if yes, the packets are not sent to the ports corresponding to the loop prevention identifiers. That is, if the loop prevention identifiers corresponding to the destination ports exist in the preset loop prevention mapping relationship table, based on preset loop prevention mapping relationships between the loop prevention identifiers corresponding to the destination ports and other ports as recorded in the preset loop prevention mapping relationship table, the packets are not sent to the ports (the destination port + other ports) corresponding to the loop prevention identifiers of the destination ports.

In one implementation, if the destination port is the port corresponding to DS-TT1, and the preset loop prevention mapping relationship between the port corresponding to DS-TT1 and the loop prevention identifier 1 as well as the preset loop prevention mapping relationship between the port corresponding to DS-TT2 and the loop prevention identifier 1 are recorded in the preset loop prevention mapping relationship table, that is, the ports corresponding to DS-TT1 and DS-TT2 belong to the same broadcast/multicast loop, the NW-TT determines that the loop prevention identifiers exist in the preset loop prevention mapping relationship table, and the packets are not sent to the port corresponding to DS-TT2 which corresponds to the loop prevention identifier corresponding to the port corresponding to DS-TT1, but are only sent to the port corresponding to DS-TT3 which does not correspond to the loop prevention identifier corresponding to the port corresponding to DS-TT1, so that the NW-TT is prevented from sending the packets to an end station x1 and an end station x2 from the ports corresponding to DS-TT2.

In this embodiment, since the packets sent by the destination ports received by the NW-TT may be sent by a terminal via the ports corresponding to the plurality of DS-TTs, when it is determined that a loop may be caused by sending the packets to the ports corresponding to the loop prevention identifiers, it can be targeted to not send the packets to the ports corresponding to the loop prevention identifiers, so that loops that may be caused by broadcasting or multicasting in the 5GS TSN virtual bridge are effectively prevented. That is, by identifying DS-TTs belonging to the same broadcast/multicast loop, the propagation of the packets between the DS-TTs within the same loop is blocked, so that the problem of broadcast loops caused when a plurality of DS-TTs are connected through one NW-TT is solved, and accordingly the problem of broadcast/multicast loops between the NW-TT and the external switches that support the IEEE 802.1CB protocol is solved.

Based on the first embodiment of the present application, another embodiment of the present application is provided. In this embodiment, after the step of identifying, when packets sent by destination ports corresponding to the DS-TTs are received, loop prevention identifiers corresponding to the destination ports, the method further includes:
In step S30, whether mapping relationships between source MAC addresses of terminals sending the packets and the destination ports exist in the first loop prevention mapping relationship table is checked.

In this embodiment, the loop prevention identifiers include source MAC addresses, the preset loop prevention mapping relationship table includes a first loop prevention mapping relationship table, and the first loop prevention mapping relationship table is used to store first loop prevention mapping relationships between port numbers of the ports corresponding to the plurality of DS-TTs and a plurality of source MAC addresses.

As an example, in the first loop prevention mapping relationship, the port corresponding to a DS-TT may be represented by a port number or other specified strings, which is not limited specifically.

As an example, since a packet carries an identifier of the source MAC address of the end station, after receiving the packet and identifying the source MAC address of the end station sending the packet via the destination port, the NW-TT may perform self-learning (no data is stored in the first loop prevention mapping relationship table) to check whether a loop prevention mapping relationship between the destination port and the corresponding source MAC address exists in the first loop prevention mapping relationship table. For example, after receiving the packet sent by the end station x1 via the port corresponding to DS-TT1, the source MAC address in the packet is identified as the source MAC address x1 of the end station x1, and whether the mapping relationship between the port corresponding to DS-TT1 and the source MAC address x1 exists in the first loop prevention mapping relationship table is checked.

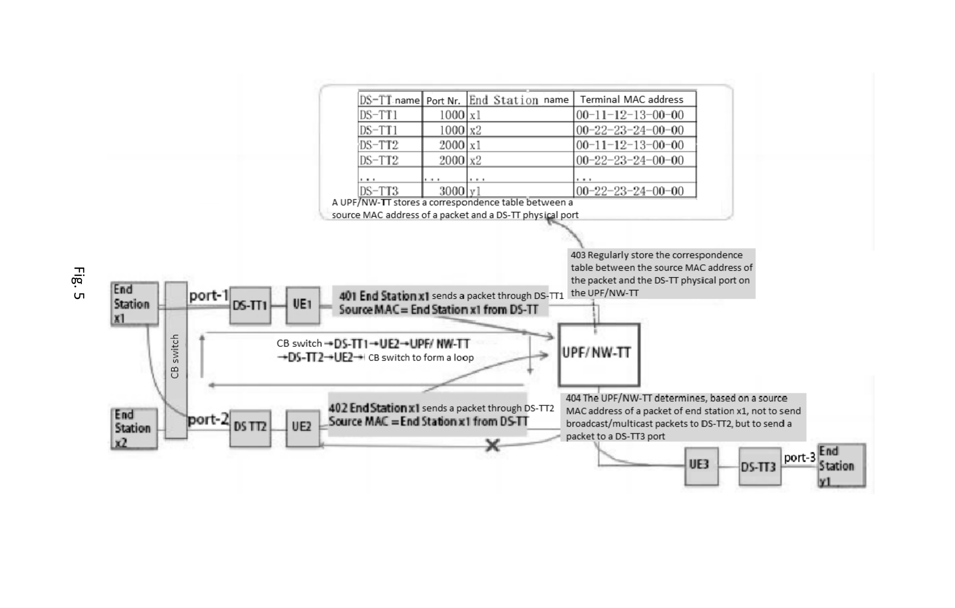

As an example, as shown in Fig. 5, the end station x1 sends a packet to the UPF/NW-TT (the NW-TT may be provided separately or in the UPF) via port-1 of DS-TT1, and the source MAC address of the packet is the MAC address of the end station x1; and the end station x1 sends a packet to the UPF/NW-TT via port-2 of DS-TT2, and the source MAC address of the packet is the MAC address of the end station x1.

As an example, the CB switch is connected to the end station x1 and the end station x2, and broadcast/multicast packets sent by the CB switch may be sent to the UPF/NW-TT via port-1, DS-TT1, and UE1 successively, or broadcast packets may be sent to the UPF/NW-TT via port-2, DS-TT2, and UE2 successively. The packets of the end stations x1 and x2 are sent redundantly. An end station y1 may send broadcast packets to the UPF/NW-TT via port-3, DS-TT3 and UE3 successively; after receiving the broadcast/multicast packets, the UPF/NW-TT self-learns the mapping relationship between the source MAC addresses of the packets and the ports corresponding to the DS-TTs, and stores the first loop prevention mapping relationship table of the source MAC addresses of the packets and the ports corresponding to the DS-TTs, as shown in Table 1.

**Table 1 First loop prevention mapping relationship table**

| DS-TT name | Port number | End station name | Terminal MAC address |
|---|---|---|---|
| DS-TT1 | 1000 | X1 | 00-11-12-13-00-00 |
| DS-TT1 | 1000 | x2 | 00-22-23-24-00-00 |
| DS-TT2 | 2000 | X1 | 00-11-12-13-00-00 |
| DS-TT2 | 2000 | X2 | 00-22-23-24-00-00 |
| ... | ... | ... | ... |
| DS-TT3 | 3000 | y1 | 00-33-34-35-00-00 |

As an example, in the first loop prevention mapping relationship table, the source MAC address x1 and the source MAC address x2 are maintained under DS-TT1, the source MAC address x1 and the source MAC address x2 are maintained under DS-TT2, and the source MAC address y1 is maintained under DS-TT3.

In step S40: if the mapping relationships between the source MAC addresses of the terminals sending the packets and the destination ports do not exist in the first loop prevention mapping relationship table, second loop prevention mapping relationships between the source MAC addresses and the port numbers of the destination ports are stored into the first loop prevention mapping relationship table.

As an example, if the end station x1 has not sent a packet via any port corresponding to the DS-TT, the mapping relationship between the port corresponding to DS-TT1 and the source MAC address x1 does not exist in the first loop prevention mapping table. If the mapping relationships between the source MAC addresses of the terminals sending the packets and the destination ports do not exist in the first loop prevention mapping relationship table, the second loop prevention mapping relationships between the source MAC addresses and the port numbers of the destination ports are stored into the first loop prevention mapping relationship table. If the mapping relationships between the source MAC addresses of the terminals sending the packets and the destination ports exist in the first loop prevention mapping relationship table, the first loop prevention mapping relationship table is not updated.

As an example, based on the source MAC address (00-11-12-13-00-00) of the packet, the UPF/NW-TT determines that MAC address records of the end station x1 exist under DS-TT1 (the port number: 1000) and DS-TT2 (the port number: 2000), and does not send broadcast/multicast packets to DS-TT1 and DS-TT2; and determines that no MAC address record of x1 exists under DS-TT3 (the port number: 3000), and sends the broadcast/multicast packets to the port corresponding to DS-TT3.

As an example, the first loop prevention mapping relationships between the ports corresponding to the plurality of DS-TTs and the plurality of source MAC addresses are continuously updated to the first loop prevention mapping relationship table, as shown in Table 1, by means of the above method.

In this embodiment, since the NW-TT self-learns the first loop prevention mapping relationship table, the time for configuring the first loop prevention mapping relationships in the first loop prevention mapping relationship table can be saved, and the loop prevention efficiency is improved.

In this embodiment, the 5GS TSN virtual bridge also includes a plurality of network elements of a control plane link of a 5GS core network, and the plurality of network elements of the control plane link include an application function (AF) and other network elements. The first loop prevention mapping relationships are configured by a CNC for each port during configuration of PSFP parameters, and are sent to local by the application function (AF) via the other network elements, where the configured PSFP parameters include source MAC addresses corresponding to the plurality of ports.

As an example, as shown in Fig. 4, the entire 5G system (DS-TT, UE and core network (CN)) is treated as a virtual bridge within the TSN network. The bridge includes network elements (an application function (AF), a network exposure function (NEF), a policy control function (PCF), a unified data management (UDM), a session management function (SMF), an access and mobility management function (AMF), a user plane function (UPF), and an NW-TT) of the 5GS core network, a wireless access network (RAN), a UE/DS-TT (the DS-TT may be provided separately or in the UE), and a 5G internal system clock (5G GM). The 5GS TSN virtual bridge achieves collaborative management with the central network configuration (CNC) via the TSN AF.

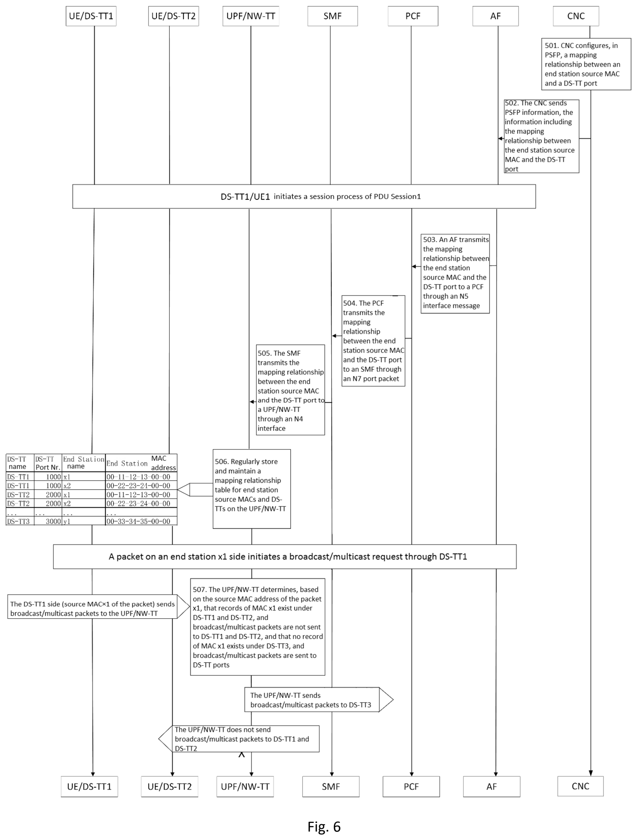

As an example, the first loop prevention mapping relationships are configured by the CNC for each port during configuration of the PSFP parameters, and are sent to local by the application function (AF) via the other network elements, where the configured PSFP parameters include the source MAC addresses corresponding to the plurality of ports. In one implementation, as shown in Fig. 6, during the configuration of the PSFP parameters, the CNC configures, for each port corresponding to the DS-TT, the mapping relationship between same and the source MAC address; after completing the configuration of the PSFP parameters, the CNC sends PSFP information to the AF, where the PSFP information includes the first loop prevention mapping relationship (as shown in Table 1) between each port corresponding to the DS-TT and the plurality of source MAC addresses; the AF extracts the first loop prevention mapping relationships and transmits the first loop prevention mapping relationships to the PCF through an N5 interface message; the PCF transmits the first loop prevention mapping relationships to the SMF through an N7 interface message; the SMF transmits the first loop prevention mapping relationships to the UPF/NW-TT through an N4 interface message; and after receiving the first loop prevention mapping relationships, the UPF/NW-TT stores same into the local preset first loop prevention mapping relationship table. The N5 interface message, the N7 interface message, and the N4 interface message are the numbers of information transmission channels for specific network elements specified in the 3rd generation partnership project (3GPP) protocol.

In this embodiment, compared with the above method that the NW-TT self-learns the preset loop prevention mapping relationship table, by manually configuring the first loop prevention mapping relationship in the CNC, certain network resources can be saved, and the loop prevention efficiency is improved.

In this embodiment, the step of skipping sending the packets to ports corresponding to the loop prevention identifiers includes:
step A1: checking the first loop prevention mapping relationship table to obtain a plurality of port numbers corresponding to the source MAC addresses.

As an example, the first loop prevention mapping relationship table is checked to obtain a plurality of port numbers corresponding to the source MAC addresses, for example, the UPF/NW-TT performs checking to obtain a plurality of port numbers (1000 and 2000) based on the source MAC address (00-11-12-13-00-00).

Step A2: skipping sending the packets to ports corresponding to the plurality of port numbers corresponding to the source MAC addresses.

As an example, the UPF/NW-TT does not send broadcast/multicast packets to the obtained ports corresponding to DS-TT1 and DS-TT2, but only sends the broadcast/multicast packets to the port corresponding to DS-TT3 which is not obtained by checking.

In this embodiment, by identifying the mapping relationship between the source MAC address carried by a packet and the destination port sending the packet, whether a mapping relationship exists between the source MAC address and other ports is determined. If yes, the ports are regarded as the same loop, and the propagation of the packet between the DS-TTs of the same loop is blocked, so that the problem of broadcast loops caused when a plurality of DS-TTs are connected through one NW-TT is solved, and addition of other identifier is not required, which reduces the difficulty of loop prevention.

Based on the first embodiment and the second embodiment of the present application, another embodiment of the present application is provided. In this embodiment, the step of skipping sending the packets to ports corresponding to the loop prevention identifiers includes:
step C1: checking a second loop prevention mapping relationship table to obtain a plurality of port numbers corresponding to destination redundancy group tags, where the destination redundancy group tags correspond to the destination ports.

In this embodiment, the loop prevention identifier also includes a plurality of redundancy group tags, the preset loop prevention mapping relationship table also includes a second loop prevention mapping relationship table, and the second loop prevention mapping relationship table is used to store third loop prevention mapping relationships between the plurality of redundancy group tags and the ports corresponding to the plurality of DS-TTs.

As an example, the redundancy group tag may be a string of characters or an identifier, etc., which is not limited specifically.

As an example, the third loop prevention mapping relationships between the plurality of redundancy group tags and the ports corresponding to the plurality of DS-TTs may be a mapping relationship between a redundancy group tag 1 and ports corresponding to DS-TT1 and DS-TT2, or a mapping relationship between the redundancy group tag 1 and ports corresponding to DS-TT2 and DS-TT3, etc., which is not limited specifically.

In this embodiment, the 5GS TSN virtual bridge also includes a plurality of network elements of a control plane link of a 5GS core network, and the plurality of network elements of the control plane link include an application function (AF) and other network elements. The third loop prevention mapping relationships are pre-configured on the application function (AF) for each port corresponding to the DS-TTs, and are sent to local via the other network elements.

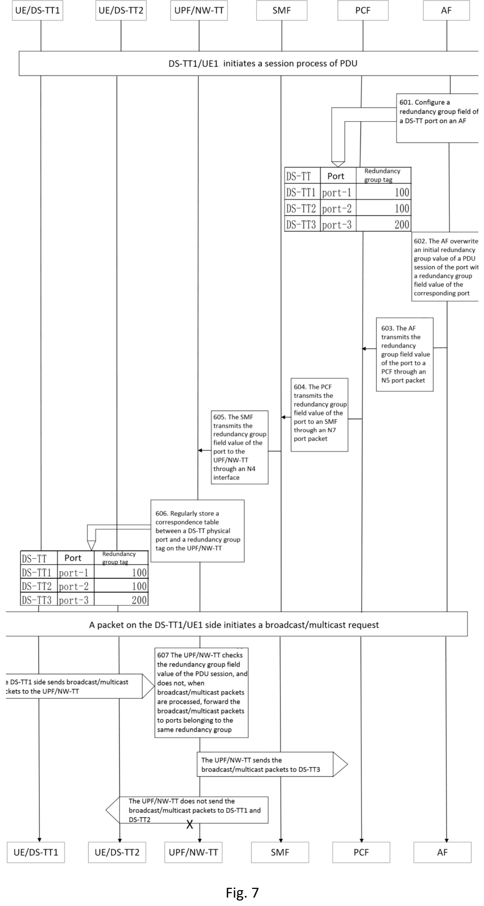

As an example, as shown in Fig. 7, redundancy group tags of the port numbers of the ports corresponding to the DS-TTs are configured on the AF, and the relationships between the port numbers of the ports corresponding to the DS-TTs and the redundancy group tags are transmitted to the UPF/NW-TT via the other network elements. In one implementation, the redundancy group tag of the port numbers of the ports corresponding to the DS-TTs are configured on the AF.

In this embodiment, by configuring the redundancy group tags of the port numbers of the ports corresponding to the DS-TTs on the AF, the effect of centralized management for the ports corresponding to the DS-TTs can be achieved, and overall control is facilitated.

As an example, after configuring the redundancy group tags of the port numbers of the ports corresponding to the DS-TTs on the AF, the AF transmits a redundancy group tag of a current PDU session to the PCF through the N5 interface message; the PCF transmits the redundancy group tag of the PDU session to the SMF through the N7 interface message; and the SMF transmits the redundancy group tag of the PDU session to the UPF/NW-TT through the N4 interface message.

In this embodiment, the third loop prevention mapping relationships may also be pre-configured on each DS-TT, and are sent to local through the plurality of network elements of the control plane link of the 5GS core network.

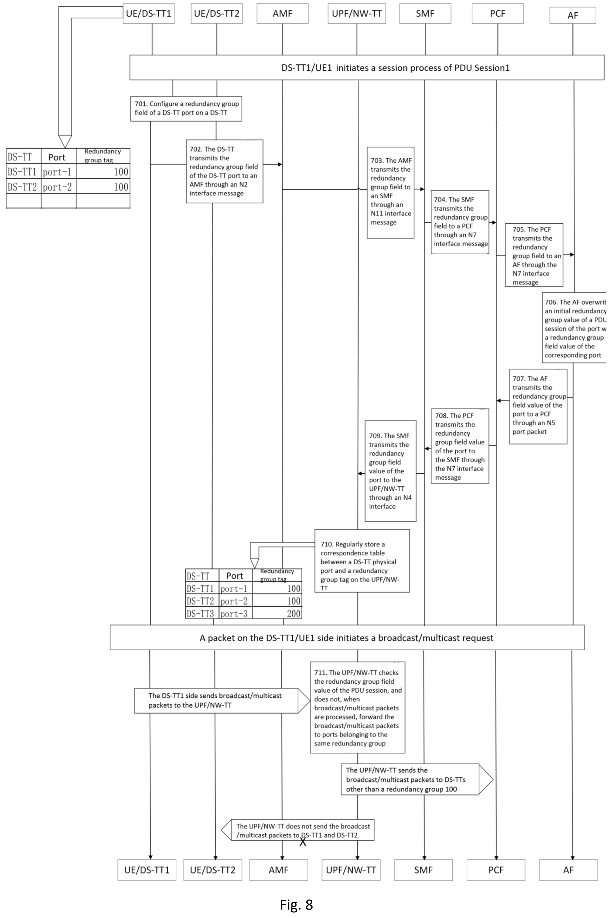

As an example, as shown in Fig. 8, the relationship between the port number of the corresponding port and the redundancy group tag is configured on each DS-TT; the DS-TT transmits a redundancy group field of the port corresponding to the DS-TT to the AMF through an N2 interface message; the AMF transmits the relationship between the port number of the port corresponding to the DS-TT and the redundancy group tag to the SMF through an N11 interface message; the SMF transmits the relationship between the port number of the port corresponding to the DS-TT and the redundancy group tag to the PCF through the N7 interface message; and the PCF transmits the relationship between the port number of the port corresponding to the DS-TT and the redundancy group tag to the AF through the N5 interface message, where the N2 interface message and the N11 interface message are respectively the numbers of information transmission channels for specific network elements specified in the 3GPP protocol.

In this embodiment, by configuring, on each DS-TT, the relationship between the port number of the corresponding port and the redundancy group tag, the problem of large global configuration information volume and cumbersome processing process caused by a large number of DS-TTs is avoided, and as the relationship is configured on each DS-TT, the relationship is ready-to-use upon configuration and is highly targeted.

As an example, the AF transmits the redundancy group tag of the PDU session to the PCF through the N5 interface message; the PCF transmits the redundancy group tag of the PDU session to the SMF through the N7 interface message; and the SMF transmits the redundancy group tag of the PDU session to the UPF/NW-TT through the N4 interface message. The mapping relationship between the port number of the port corresponding to the DS-TT and the redundancy group tag is stored in the UPF/NW-TT.

In this embodiment, the step of determining whether the loop prevention identifiers exist in a preset loop prevention mapping relationship table includes:
step B1: acquiring redundancy group fields in information of PDU sessions corresponding to terminals sending the packets.

In this embodiment, after the configuration of the third loop prevention mapping relationships is completed, a new redundancy group field corresponding to a redundancy group tag in the third loop prevention mapping relationship is added to information of a PDU session corresponding to each terminal.

As an example, a new redundancy group field is added to the PDU session, and the initial value of the field is 0. The AF fills the value of the redundancy group field of the PDU session as 100 or 10, etc., which is not limited specifically.

As an example, after receiving the redundancy group tag of the PDU session from the SMF, the UPF/NW-TT acquires the redundancy group field in the information of the PDU session corresponding to the terminal sending the packet. In one implementation, the redundancy group field in the information of the PDU session corresponding to the terminal sending the packet is obtained as 100 or 10, etc., which is not limited specifically.

Step B2: determining, if the redundancy group fields exist in the second loop prevention mapping relationship table, that the destination redundancy group tags exist in the second loop prevention mapping relationship table.

As an example, the UPF/NW-TT checks the second loop prevention mapping relationship table to determine whether the PDU session has a redundancy group field value of 100. If yes, it is determined that the destination redundancy group tag exists in the second loop prevention mapping relationship table. The ports corresponding to DS-TT1 and DS-TT2 are maintained under the destination redundancy group tag.

Step C2: skipping sending the packets to the ports corresponding to the plurality of port numbers corresponding to the destination redundancy group tags.

As an example, when a broadcast/multicast packet is processed, the broadcast/multicast packets are not forwarded to the ports corresponding to DS-TT1 and DS-TT2 corresponding to the destination redundancy group tag with a redundancy group field value of 100, and are only forwarded to the port corresponding to DS-TT3.

In this embodiment, by configuring the redundancy group tag, the propagation of packets between DS-TTs within the same loop can be detected and blocked, so that the problem of broadcast loops caused when a plurality of DS-TTs are connected through one NW-TT is solved, and the redundancy group tags are ready-to-use upon configuration, thereby being convenient and independent. In actual TSN services, redundancy mechanisms are widely employed. For example, in industrial applications, for some programmable logic controller (PLC) controlled devices, unmanned aerial vehicles, sensors, AR/VR, robotic arms, etc., redundancy mechanisms are utilized to ensure the reliability of the services. When enterprises aim to centrally manage a large number of DS-TTs through a very few UPF/NW-TTs, that is, in a scenario where a plurality of DS-TTs are connected through one UPF/NW-TT, the loop prevention method for the 5GS TSN virtual bridge provided in the present application can be adopted to solve the problems of broadcast or multicast loops. By connecting a plurality of DS-TTs through one UPF/NW-TT, the usage cost is reduced.

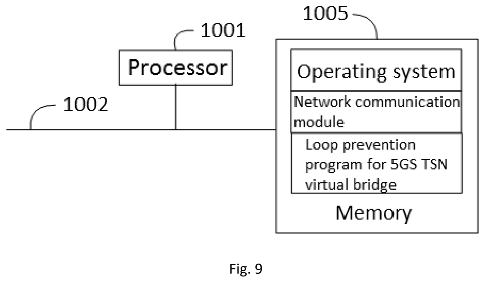

Referring to Fig. 9, Fig. 9 is a schematic structural diagram of devices in a hardware operating environment involved in the embodiment scheme of the present application.

As shown in Fig. 9, a loop prevention device for a 5GS TSN virtual bridge may include: a processor 1001, a memory 1005, and a communication bus 1002. The communication bus 1002 is used for implementing the connection and communication between the processor 1001 and the memory 1005.

In one implementation, the loop prevention device for the 5GS TSN virtual bridge may further include a user interface, a network interface, a camera, a radio frequency (RF) circuit, a sensor, a WiFi module, etc. The user interface may include a display and an input sub-module such as a keyboard, and the user interface may further include a standard wired interface and wireless interface. The network interface may include a standard wired interface and wireless interface (such as a WiFi interface).

Those skilled in the art can understand that the structure of the loop prevention device for the 5GS TSN virtual bridge shown in Fig. 9 does not constitute a limitation on the loop prevention device for the 5GS TSN virtual bridge, and can include more or fewer components than the illustrated ones, or combine certain components, or have different component arrangements.

As shown in Fig. 9, the memory 1005, as a storage medium, may include an operating system, a network communication module, and a loop prevention program for the 5GS TSN virtual bridge. The operating system is a program that manages and controls hardware and software resources of the loop prevention device for the 5GS TSN virtual bridge, and supports the operation of the loop prevention program for the 5GS TSN virtual bridge as well as other software and/or programs. The network communication module is used to achieve communication between the components in the memory 1005 and communication with other hardware and software in a loop prevention system for a 5GS TSN virtual bridge.

In the loop prevention device for the 5GS TSN virtual bridge shown in Fig. 9, the processor 1001 is configured to execute the loop prevention program for the 5GS TSN virtual bridge stored in the memory 1005, and to implement the steps of the loop prevention method for the 5GS TSN virtual bridge as described in any of the above embodiments.

The specific implementations of the loop prevention device for the 5GS TSN virtual bridge in the present application are basically the same as the various embodiments of the loop prevention method for the 5GS TSN virtual bridge, which will not be described in detail here.

The present application further provides a storage medium. A loop prevention program for a 5GS TSN virtual bridge is stored on the storage medium, and implements, when executed by a processor, the steps of the loop prevention method for the 5GS TSN virtual bridge as described in any of the above embodiments.

The specific implementations of the storage medium in the present application are basically the same as the various embodiments of the loop prevention method for the 5GS TSN virtual bridge, which will not be described in detail here.

It is to be noted that, as used herein, the terms "including," "comprising," or any other variations thereof are intended to cover non-exclusive inclusion, such that a process, method, article, or system including a series of elements includes not only those elements but also other elements that are not expressly listed, or that are inherent to such process, method, article or system. Without further limitation, the fact that an element is defined by the phrase "including a ..." does not preclude the existence of another identical element in the process, method, article, or system that includes that element.

The serial numbers of the above-mentioned embodiments of this application are merely for the purpose of description and do not indicate the superiority or inferiority of the embodiments.

By the above description of the implementation, it is clear to those skilled in the art that the above embodiment methods may be implemented with the aid of software and necessary general hardware platforms, or of course by means of hardware, but in many cases the former is the preferred implementation. Based on this understanding, the technical solutions of the present application, in essence or as a contribution to the prior art, may be embodied in the form of a software product. The computer software product is stored in a storage medium (such as an ROM/RAM, a disk and a compact disc) described above, and includes a plurality of instructions to cause a terminal device (which may be a mobile phone, a computer, a server, an air conditioner, or a network device, or the like) to perform the method described in the various embodiments of the present application.

The above are merely optional embodiments of the present application, and are not intended to limit the scope of the patent of the present application. Any equivalent structure or equivalent process transformation made by utilizing the contents of the specification and accompanying drawings of the present application, or directly or indirectly applying same in other related technical fields, similarly fall within the scope of protection of the patent of the present application.

## Claims

1. A loop prevention method for a 5GS time-sensitive network (TSN) virtual bridge, applied to a network-side TSN translator (NW-TT) in the 5GS TSN virtual bridge, wherein the 5GS TSN virtual bridge further comprises device-side TSN translators (DS-TTs), and one NW-TT corresponds to a plurality of DS-TTs; and
the loop prevention method for a 5GS TSN virtual bridge comprises the following steps:
identifying, when packets sent by destination ports corresponding to the DS-TTs are received, loop prevention identifiers corresponding to the destination ports; and
determining whether the loop prevention identifiers exist in a preset loop prevention mapping relationship table, and if yes, skipping sending the packets to ports corresponding to the loop prevention identifiers, wherein the preset loop prevention mapping relationship table is used to store preset loop prevention mapping relationships between ports corresponding to the plurality of DS-TTs and the loop prevention identifiers.

2. The loop prevention method for a 5GS TSN virtual bridge according to claim 1, wherein the loop prevention identifiers comprise source MAC addresses, the preset loop prevention mapping relationship table comprises a first loop prevention mapping relationship table, and the first loop prevention mapping relationship table is used to store first loop prevention mapping relationships between port numbers of the ports corresponding to the plurality of DS-TTs and a plurality of source MAC addresses; and
after the step of identifying, when packets sent by destination ports corresponding to the DS-TTs are received, loop prevention identifiers corresponding to the destination ports, the method further comprises:
checking whether mapping relationships between source MAC addresses of terminals sending the packets and the destination ports exist in the first loop prevention mapping relationship table; and
if not, storing second loop prevention mapping relationships between the source MAC addresses and port numbers of the destination ports into the first loop prevention mapping relationship table.

3. The loop prevention method for a 5GS TSN virtual bridge according to claim 2, wherein the step of skipping sending the packets to ports corresponding to the loop prevention identifiers comprises:
obtaining a plurality of port numbers corresponding to the source MAC addresses by checking the first loop prevention mapping relationship table; and
skipping sending the packets to ports corresponding to the plurality of port numbers corresponding to the source MAC addresses.

4. The loop prevention method for a 5GS TSN virtual bridge according to claim 3, wherein the 5GS TSN virtual bridge further comprises a plurality of network elements of a control plane link of a 5GS core network, and the plurality of network elements of the control plane link comprise an application function (AF) and other network elements; and
the first loop prevention mapping relationships are configured by a CNC for each port during configuration of PSFP parameters, and are sent to local by the AF via the other network elements, wherein the configured PSFP parameters comprise source MAC addresses corresponding to a plurality of ports.

5. The loop prevention method for a 5GS TSN virtual bridge according to claim 1, wherein the loop prevention identifiers further comprise a plurality of redundancy group tags, the preset loop prevention mapping relationship table further comprises a second loop prevention mapping relationship table, and the second loop prevention mapping relationship table is used to store third loop prevention mapping relationships between the plurality of redundancy group tags and the ports corresponding to the plurality of DS-TTs; and
the step of skipping sending the packets to ports corresponding to the loop prevention identifiers comprises:
obtaining a plurality of port numbers corresponding to destination redundancy group tags by checking the second loop prevention mapping relationship table, wherein the destination redundancy group tags correspond to the destination ports; and
skipping sending the packets to ports corresponding to the plurality of port numbers corresponding to the destination redundancy group tags.

6. The loop prevention method for a 5GS TSN virtual bridge according to claim 5, wherein the 5GS TSN virtual bridge further comprises a plurality of network elements of a control plane link of a 5GS core network, and the plurality of network elements of the control plane link comprise an application function (AF) and other network elements; and
the third loop prevention mapping relationships are pre-configured on the AF for each port corresponding to the DS-TTs, and are sent to local via the other network elements.

7. The loop prevention method for a 5GS TSN virtual bridge according to claim 5, wherein the third loop prevention mapping relationships are pre-configured on each DS-TT, and are sent to local via a plurality of network elements of a control plane link of a 5GS core network.

8. The loop prevention method for a 5GS TSN virtual bridge according to claim 6 or 7, wherein after the configuration of the third loop prevention mapping relationships is completed, a new redundancy group field corresponding to a redundancy group tag in the third loop prevention mapping relationship is added to information of a PDU session corresponding to each terminal; and
the step of determining whether the loop prevention identifiers exist in a preset loop prevention mapping relationship table comprises:
acquiring a redundancy group field in information of a PDU session corresponding to a terminal sending the packets; and
determining, in a case that the redundancy group fields exist in the second loop prevention mapping relationship table, that the destination redundancy group tags exist in the second loop prevention mapping relationship table.

9. A loop prevention device for a 5GS TSN virtual bridge, comprising: a memory, a processor, and a loop prevention program for a 5GS TSN virtual bridge stored on the memory and capable of running on the processor, wherein the loop prevention program for a 5GS TSN virtual bridge is configured to implement the steps of the loop prevention method for a 5GS TSN virtual bridge according to any one of claims 1 to 8.

10. A storage medium, wherein the storage medium stores a loop prevention program for a 5GS TSN virtual bridge, and the loop prevention program for the 5GS TSN virtual bridge implements, when executed by a processor, the steps of the loop prevention method for a 5GS TSN virtual bridge according to any one of claims 1 to 8.
